# DEMANDE DE BREVET EUROPEEN

(11) **EP 3 744 680 A1**
(43) Date de publication de la demande: **02.12.2020**
(21) Numéro de dépôt: 20176881.9
(22) Date de dépôt: 27.05.2020
(51) Int. Cl.: C01B 3/06

(54) **PROPULSION ANAÉROBIE D'UN ENGIN SOUS-MARIN COMPRENANT LA DISSOLUTION SÉQUENCÉE D'HYDRURE SOLIDE EMBARQUÉ**

(30) Priorité: 28.05.2019 FR 1905612
(71) Demandeur: Naval Group, 75015 Paris (FR)
(72) Inventeur: LE CARFF, Franck, 56311 Lorient cedex (FR); BENAC, Stéphane, 56311 Lorient cedex (FR)
(74) Mandataire: Lavoix

(57) **Abrégé**

La présente invention concerne un procédé de propulsion anaérobie d'un sous-marin comprenant une réserve d'hydrure embarquée sous forme solide et la dissolution séquencée de l'hydrure solide, ainsi que le système de production correspondant.

## Description

La présente demande concerne le domaine de la propulsion d'engins sous-marins, et notamment la propulsion anaérobie (Air Independent Propulsion - AIP) à pile à combustible, notamment à pile à hydrogène.

La propulsion anaérobie permet d'accroître significativement l'autonomie en plongée des engins sous-marins, et de limiter les retours réguliers vers la surface pour faire tourner les moteurs afin de recharger les batteries utilisées en immersion, ceci représentant des périodes d'indiscrétion indésirable.

La capacité à stocker un maximum d'hydrogène dans un volume limité est un enjeu fondamental des systèmes de production d'énergie AIP à pile à combustible.

Les borohydrures ou aluminohydrures (par exemple KBH4, LiBH4, NaAIH4, LiAIH4 ou NaBH₄) sont un moyen de stockage et de production d'hydrogène par hydrolyse. Par la suite ces borohydrures ou aluminohydrures sont notés XH₄

Les systèmes AIP usuels au XH₄ sont basés sur un stockage aqueux. Ainsi, WO 2017145068 propose un système d'AIP avec pile à combustible type PAFC (pile à combustible à acide phosphorique), et un système de production d'hydrogène à base de solution de NaBH₄ sous forme liquide. Le NaBH₄ est ainsi stocké sous forme d'une solution aqueuse.

Le stockage de solutions de XH₄ présente cependant des désavantages techniques importants, tels que le poids, l'encombrement et la stabilité des solutions.

Il est donc nécessaire de mettre à disposition un moyen de stockage alternatif embarqué et un procédé permettant la production d'hydrogène.

La présente invention propose un système de propulsion amélioré à partir de XH₄ embarqué sous forme solide.

Selon un premier objet, la présente invention concerne un procédé de propulsion anaérobie (AIP) d'un engin sous-marin comprenant la production d'hydrogène (H₂) par hydrolyse de borohydrure ou d'un aluminohydrure, de formule XH₄ dans laquelle X est choisi parmi KB, LiB, NaB, KAI, LiAI, NaAI, ledit procédé comprenant :
i) Le stockage de NaBH₄ embarqué sous forme solide, réparti dans au moins un réservoir de stockage, ;
ii) L'ajout d'une solution aqueuse de dissolution et d'une solution aqueuse basique dans un des réservoirs de stockage ;
iii) La circulation forcée du mélange ainsi obtenu au sein d'un caisson de dissolution et dudit réservoir de stockage ;
iv) L'extraction de la solution aqueuse de NaBH₄ ainsi obtenue du caisson de dissolution vers le réacteur de production de H₂ ;
v) La reproduction des étapes ii) à iv) en séquence à partir avec un autre réservoir de stockage.

Sans être exhaustif, la présente invention permet de résoudre entre autres, les problèmes inhérents au stockage aqueux du XH₄ et d'optimiser la dissolution du XH₄ :
- En absence d'eau, le XH₄ solide ne produit pas d'hydrogène ce qui permet de contrôler la production d'hydrogène pendant la mission du navire ;
- Suppression des dégagements d'hydrogène indésirables lorsque la production d'hydrogène n'est pas nécessaire ;
- Suppression des problèmes de cristallisation XH₄ non maîtrisée dans les réservoirs ;
- Augmentation de la quantité de XH₄ embarqué par unité de volume (la fraction massique d'hydrogène du XH₄ solide étant supérieure à une solution du XH₄ concentrée) ;
- La circulation forcée à travers un réservoir de stockage et un caisson de dissolution permet d'optimiser la dissolution ;
- La production continue du XH₄ aqueux à partir d'un ensemble de réservoirs du XH₄ solide distincts ;
- L'optimisation du temps de dissolution de XH₄ par l'agitation mécanique du XH₄ par recirculation d'eau ;
- La suppression de convoyage solide à bord du sous-marin, source de bruit et de risque technique important;
- La suppression des moyens de type pompe solide pour l'injection du XH₄ dans le réacteur.

En particulier, le procédé selon l'invention permet notamment de créer une solution aqueuse de XH₄ à bord au fur et à mesure de l'alimentation du réacteur de production d'hydrogène.

XH₄ peut être stocké au sein d'un réservoir de stockage ou réparti dans au moins deux réservoirs de stockage. Le fractionnement du stockage de XH₄ au sein de plusieurs réservoirs et le séquençage successif de la mise en solution réservoir par réservoir permet de dédier un volume limité à la mise en solution du XH₄ et d'en diminuer la concentration pour rejeter tout risque de cristallisation du XH₄ en solution quelles que soient les températures dans lesquelles le navire évolue.

Selon un mode de réalisation, XH₄ est notamment NaBH₄ ou LiBH₄. Selon un mode de réalisation, le XH₄ solide est stocké sous forme de comprimés (« caplets »), granulés (« pellets ») ou poudre, plus particulièrement sous forme de caplets.

Selon un mode de réalisation, le procédé comprend en outre l'étape d'introduction de la solution aqueuse de XH₄ ainsi obtenue après extraction dans le réacteur d'hydrolyse de production de H₂.

La solution aqueuse de dissolution peut provenir du recyclage de la solution aqueuse à l'issue de l'étape d'hydrolyse. Selon un mode de réalisation, le procédé comprend le recyclage de l'eau produite lors de la production de H₂ à la sortie de réacteur d'hydrolyse pour l'alimentation de la solution aqueuse de dissolution.

Pour initier le procédé de l'invention, il convient alors de disposer d'une solution aqueuse d'amorçage, qui, ajoutée au premier desdits réservoirs de stockage, permet alors de constituer la solution aqueuse de dissolution. Selon un mode de réalisation, le procédé comprend l'étape préliminaire d'amorçage, ladite étape d'amorçage comprenant la dissolution de XH₄ solide par une solution aqueuse d'amorçage embarquée.

Selon un mode de réalisation, la solution aqueuse basique comprend de la soude (NAOH) et/ou de la potasse (KOH). Typiquement, la solution aqueuse basique comprend une ou plusieurs bases à concentration en base comprise entre 1 et 1 0% en poids.

Le procédé peut être mis en œuvre sous atmosphère inerte, par exemple sous atmosphère d'azote. Selon un mode de réalisation, le procédé comprend l'application d'un flux d'azote (N₂) par exemple à 0.1 bar, au sein des réservoirs de stockage et du caisson de dissolution.

Le procédé selon l'invention peut également comprendre des moyens d'agitation de XH₄ solide et/ou de la solution de dissolution chargée en XH₄.

Selon un mode de réalisation, le procédé selon l'invention comprend en outre l'extraction de l'hydrogène créé lors de la dissolution vers une pile à combustible.

Il est important que la solution de dissolution présente une concentration en XH₄ inférieure à la concentration critique de cristallisation de XH₄. De fait, il est possible de suivre la concentration de XH₄ dans la solution de dissolution et de fixer une concentration Cmax strictement inférieure à la concentration critique de cristallisation du XH₄ qu'elle ne doit pas dépasser. Selon un mode de réalisation, la dissolution est conduite jusqu'à une concentration de XH₄(max) inférieure à la concentration critique de cristallisation du XH₄.

La concentration peut par exemple être mesurée par voltampérométrie ou spectroscopie d'impédance électrochimique...

Typiquement, ladite concentration critique dépend de la température de la solution de XH₄

Dans ce qui précède et ce qui suit :
On entend par « embarqué », le stockage du XH₄ à bord d'un engin sous-marin, impliquant généralement une double limitation, d'ordre spatial (encombrement réduit) et énergétique (consommation restreinte).

Les termes « réserve » et « stockage » sont ici utilisés de façon interchangeable et désignent le stock de XH₄, dans un ou plusieurs containers.

On entend par « engin sous-marin » notamment un sous-marin proprement dit, ou tout autre équipement ou véhicule sous-marin nécessitant pour sa propulsion ou son fonctionnement une source d'hydrogène alimentée par XH₄.

Le terme « réacteur d'hydrolyse » désigne l'appareil généralement constitué d'au moins un récipient et un moyen d'agitation dans lequel est conduite la réaction entre l'eau et XH₄, conduisant à la formation d'hydrogène, selon la réaction :

XH₄ + 2 H₂O -> 4 H₂ + XO₂

On entend par « solution aqueuse de dissolution » une solution à base d'eau utilisée pour dissoudre le XH₄ solide, de façon à former une solution aqueuse de XH₄. Ladite solution aqueuse de dissolution contient essentiellement de l'eau mais peut également contenir un ou plusieurs autres agents dissous, tels que des bases NaOH ou KOH aqueuses qui permettent la stabilisation de la solution.

Le terme « caisson de dissolution » désigne l'appareil généralement constitué d'au moins un récipient et d'un moyen d'agitation, dans lequel on peut réaliser le mélange de XH₄ dans l'eau, le mélange pouvant être réalisé de façon continue. Le caisson de dissolution peut donc être rempli au moins en partie avec la solution aqueuse de dissolution.

Selon l'un ou l'autre des modes de réalisation, le XH₄ peut avantageusement être stabilisé par une ou plusieurs bases. Typiquement, la ou les bases peuvent présentes dans le XH₄ solide, dans la solution aqueuse de dissolution, et/ou dans la solution aqueuse de XH₄.

Le terme « circulation » s'entend ici comme la circulation et la recirculation entre le caisson de dissolution et ledit réservoir de stockage.

Selon un autre objet, la présente invention concerne également un système de propulsion anaérobie embarqué d'un engin sous-marin comprenant :
- un système (10) de production d'hydrogène embarqué à partir de XH₄,
- une pluralité de réservoirs (1, 1', 1") de stockage de XH₄ solide (2, 2', 2"), la pluralité de réservoirs (1,1', 1") de stockage étant montée en parallèle les uns des autres;
- un caisson (11) de dissolution;
- un réacteur d'hydrolyse (10) relié au caisson de dissolution,
- au moins un moyen (3, 3', 3") d'introduction d'une solution aqueuse de dissolution (7,7') dans au moins un réservoir (1, 1', 1") de stockage

Caractérisé en ce qu'il comprend au moins un moyen (4') de circulation de la solution aqueuse de dissolution (7') entre le caisson (11) de dissolution et au moins un des réservoirs (1, 1', 1") de stockage.

Selon un mode de réalisation, ledit système peut comprendre, en outre :
- un réservoir d'une solution aqueuse d'amorçage ; et
- au moins un moyen d'introduction de la solution aqueuse d'amorçage vers le réservoir (1, 1', 1") de stockage de XH₄ solide (2, 2', 2").

Selon un mode de réalisation, ledit système comprend au moins un moyen de recyclage de l'eau produite lors de la production de H₂ vers le caisson de dissolution.

Selon un mode de réalisation, il peut être intéressant d'augmenter le pH de la solution de dissolution afin d'empêcher la cristallisation de XH₄. Ainsi, le système peut être pourvu d'un réservoir de stockage d'une solution aqueuse basique, et d'au moins un moyen d'introduction de la solution aqueuse basique dans la solution de dissolution. La solution aqueuse de dissolution et la solution aqueuse basique peuvent donc être mélangées pour obtenir une solution aqueuse basique ou être deux solutions séparées.

L'invention sera mieux comprise à la lecture de la description qui va suivre, donnée uniquement à titre d'exemple et faite en se référant aux dessins annexés, sur lesquels :
[Fig 1] la figure 1 représente de façon schématique système selon l'invention dans son état initial, par exemple pour un départ de mission du sous-marin.
[Fig 2] la figure 2 représente de façon schématique la dissolution du premier réservoir de stockage de XH₄ avant le démarrage du système de propulsion (AIP).
[Fig 3] la figure 3 représente de façon schématique la consommation de la première réserve de XH₄.
[Fig 4] la figure 4 représente de façon schématique la circulation de la solution de dissolution et remplissage au sein du deuxième réservoir.
[Fig 5] la figure 5 représente de façon schématique la dissolution du XH₄ du deuxième réservoir de stockage.
[Fig 6] la figure 6 représente de façon schématique la consommation du deuxième réservoir.

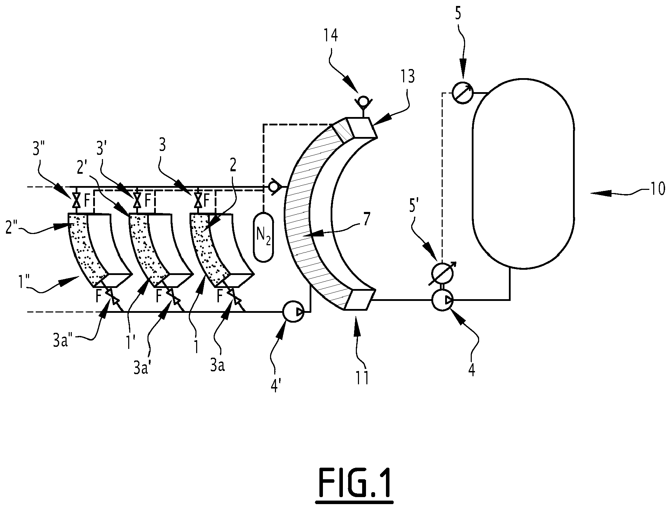

On a en effet illustré sur les figures 1 à 6 la mise en œuvre du procédé selon l'invention pour un système comprenant 3 réservoirs de stockage désignés par les références générales 1, 1' et 1" de XH₄ solide désigné respectivement par les références générales 2, 2' et 2", au fur et à mesure de la dissolution successive du premier réservoir 1 puis du deuxième réservoir 1' de stockage. Le XH₄ solide peut par exemple être sous forme de poudre, comprimés, pellets ou autre.

Comme illustré à la Figure 1, le système dans son état initial comprend des réservoirs de stockage 1, 1' et 1" rempli de XH₄ solide 2, 2' et 2" respectivement, lesdits réservoirs étant arrangés en parallèle les uns des autres, et sont par ailleurs arrangés en série avec un caisson de dissolution désigné par la référence générale 11.

Des vannes 3, 3', 3" et 3a, 3a', 3a" sont placées respectivement à l'entrée et la sortie de chacun des réservoirs de stockage 1, 1' et 1" pour contrôler la circulation de la solution de dissolution entre le caisson 11 et les différents réservoirs.

Ledit caisson 11 est rempli au moins en partie par une solution aqueuse de dissolution désignée par la référence générale 7, le volume étant complété par une atmosphère inerte, par exemple de l'azote N₂ sous pression désigné par la référence générale 13. Une valve anti-retour désignée par la référence générale 14 obture le caisson 11 à son sommet pour évacuer les surpressions de gaz. Une valve anti-retour désignée par la référence générale 14' équipe également la sortie de la solution de dissolution du caisson 7 vers le circuit alimentant les réservoirs, afin d'éviter les retours éventuels vers le caisson 11.

Le caisson 11 est également relié au réacteur d'hydrolyse désigné par la référence générale 10 permettant la production d'hydrogène désigné par la référence générale 6, à partir dudit XH₄. Une pompe désignée par la référence générale 4 contrôle la circulation depuis le caisson 11 vers le réacteur 10.

Le système peut comprendre un manomètre représenté par la référence générale 5 pour mesurer la pression de l'hydrogène formé dans le réacteur 10. Ledit manomètre peut être relié à la pompe 4 pour moduler le flux d'entrée de la solution de dissolution à l'entrée du réacteur 10.

L'hydrogène formé 2 est ensuite extrait et transféré du réacteur 10 vers une pile à combustible, de façon classique désignée par la référence générale 9, par exemple au moyen d'une pompe.

La solution de dissolution 7 peut provenir d'un réservoir d'une solution aqueuse d'amorçage (non représenté sur les figures). Dans ce cas, le système peut comprendre en outre au moins un moyen d'introduction de la solution aqueuse d'amorçage vers le réservoir 1 de stockage de XH₄ solide ou vers le caisson 11.

Typiquement, et bien que non représenté sur les figures, le système peut également comprendre au moins un moyen de recyclage de l'eau produite lors de la production de H₂ vers le caisson de dissolution.

A l'état initial (Figure 1), la solution de dissolution est uniquement présente .dans le caisson 11, et est essentiellement constituée d'eau (à laquelle peuvent être ajoutés un ou plusieurs additifs). Les réservoirs de stockage 1, 1' et 1" sont chargés en XH₄ solide 2, 2' et 2". Les vannes 3, 3', 3", 3a, 3a' et 3a" sont fermées et la pompe désignée par la référence générale 4' est à l'arrêt, empêchant la circulation entre le caisson 11 et les réservoirs 1, 1' et 1".

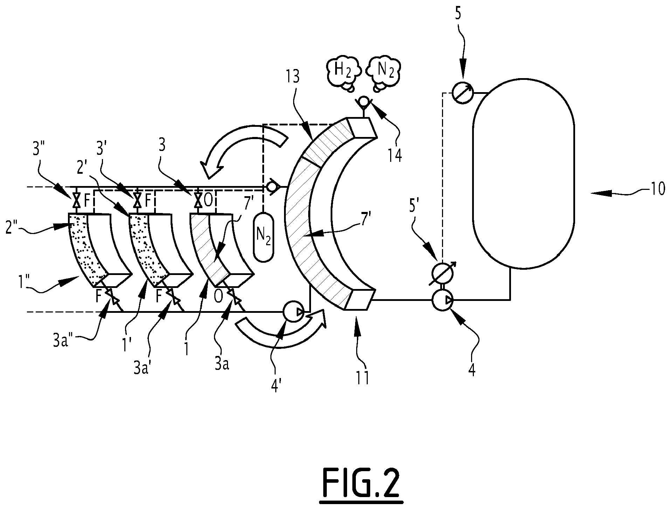

En fonctionnement (Figure 2), si une alimentation de la pile en hydrogène est nécessaire, la dissolution du XH₄ présent dans un premier caisson 1 est amorcée : pour cela, la circulation de la solution de dissolution 7 entre le caisson 11 et le réservoir 1 est déclenchée, par ouverture des vannes 3 et 3a et mise en fonctionnement de la pompe 4'. Au fur et à mesure que la solution 7 circule dans le réservoir 1, elle dissout du XH₄ et se charge en XH₄. La solution de dissolution chargée en XH₄ est désignée par la référence générale 7' : la solution 7' diffère de la solution 7 en ce que sa concentration en XH₄ est supérieure.

Si de l'hydrogène est formé lors de cette circulation forcée, la surpression d'hydrogène peut être évacuée du caisson 11 par le clapet anti-retour 14.

La circulation forcée de la solution 7' est poursuivie jusqu'à ce que sa concentration en XH₄ atteigne une valeur prédéterminée. Cette concentration peut être notamment mesurée avec un voltampéromètre ou un spectroscope d'impédance électrochimique.

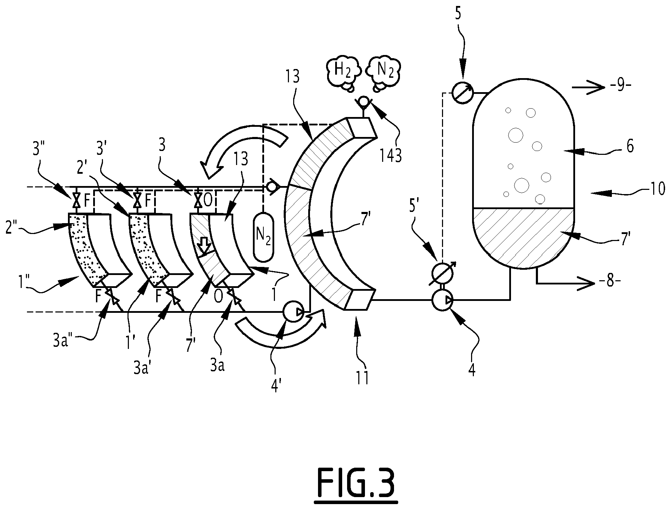

Lorsque cette valeur est atteinte, on met fin à la circulation à travers le réservoir 1. Comme illustré à la Figure 3, on peut par exemple purger le réservoir 1 par surpression, par exemple avec une surpression d'azote. En parallèle, la pompe 4 est activée pour engager la circulation de la solution 7' chargée entre le caisson 11 et le réacteur 10.

Au sein du réacteur 10, la solution 7' subit une hydrolyse formant du dihydrogène gazeux 6 qui est évacué vers la pile 9.

Le flux de la pompe est contrôlé en fonction de la pression en hydrogène formé, mesuré par le manomètre 5. Lorsque suffisamment d'hydrogène est formé, le flux d'alimentation généré par la pompe 4 peut ainsi être diminué ou stoppé.

Le résidu de réaction est évacué du réacteur 8. Il est possible de recycler l'eau à la 0sortie du réacteur vers l'alimentation de la solution de dissolution 7 ou 7'.

Lorsque le contenu du réservoir 1 est purgé, on ajoute de l'eau au circuit de circulation, éventuellement additionnée de base. L'eau peut provenir d'une alimentation telle qu'un réservoir de stockage et/ou peut provenir du recyclage de l'eau obtenue à l'issue de la réaction d'hydrolyse.

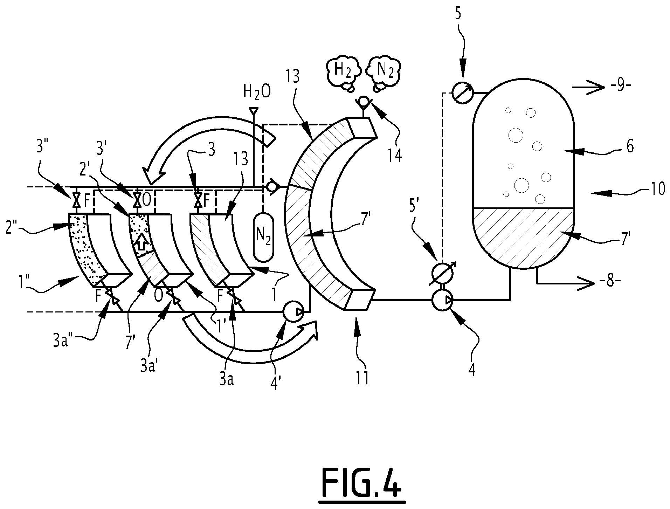

Comme illustré à la Figure 4, de la soude ou de la potasse peuvent être ajouté à une concentration de 2% en poids à l'eau ainsi ajoutée, afin d'éviter la cristallisation de XH₄ dans la solution de dissolution 7'. D'autres bases et/ou mélanges de bases peuvent cependant être utilisées, à des concentrations qui peuvent être typiquement comprises entre 0.5 et 5% en poids. Il est également possible de mélanger une base au sein du XH₄ solide 2, 2' et/ou 2". Le système peut donc également comprendre un réservoir de stockage d'une solution aqueuse basique, et d'au moins un moyen d'introduction de la solution aqueuse basique dans la solution de dissolution.

Cette alimentation constitue alors une nouvelle solution de dissolution 7 dont la circulation peut être engagée via le réservoir 1', comme illustré à la Figure 4.

Pour cela, on ouvre les vannes 3' et 3a', tandis que les vannes 3 et 3a sont fermées. La solution 7 circule alors au sein du XH₄ solide 2' contenu dans le réservoir 1' et via le caisson 11, par l'action de la pompe 4'. Au fur et à mesure du passage dans le XH₄ solide 2', la solution se charge en XH₄ dissout de façon à atteindre la concentration de la solution 7'. Si de l'hydrogène est nécessaire pour alimenter la pile, la solution 7' ainsi chargée en XH₄ est alimentée dans le réacteur par fonctionnement de la pompe 4.

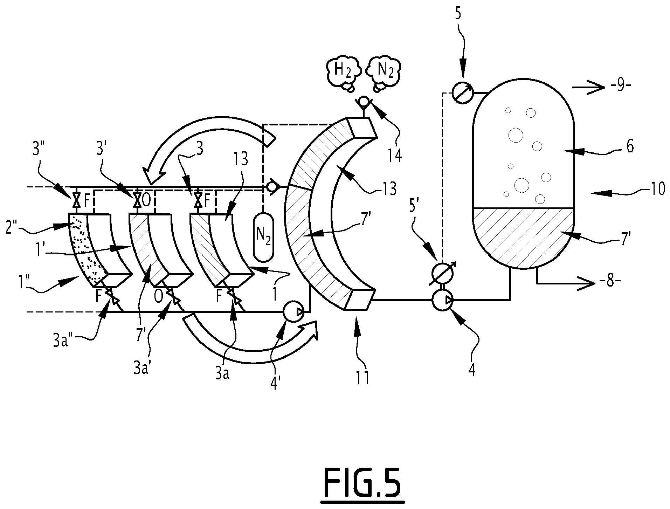

La Figure 5 illustre le fonctionnement du système lors de la circulation forcée via le caisson 13, le réservoir 1' et alimentation du réacteur 10: en régime stationnaire, l'alimentation en eau peut être stoppée.

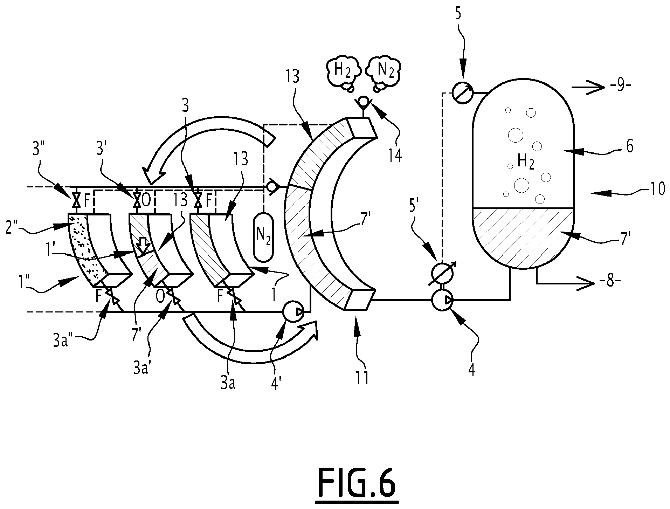

Lorsque la concentration de la solution 7' en XH₄ atteint une valeur prédéterminée, on clôture la circulation à travers le réservoir 1'. Comme illustré à la Figure 6, on peut par exemple purger le réservoir 1' par surpression, par exemple avec une surpression d'azote. A l'issue de cette purge, il est alors possible de fermer les vannes 3' et 3a' et d'ouvrir les vannes 3" et 3a" afin d'engager la circulation à travers le réservoir 1" et de dissoudre le XH₄ 2". Ceci peut être effectué comme explicité ci-dessus.

## Revendications

1. Procédé de propulsion anaérobie (AIP) d'un engin sous-marin comprenant la production d'hydrogène (H₂) par hydrolyse de borohydrure ou d'aluminohydrure, de formule XH₄
dans laquelle X est choisi parmi KB, LiB, NaB, KAI, LiAI, NaAI,
ledit procédé comprenant :
i) Le stockage de XH₄ embarqué sous forme solide, réparti dans au moins un réservoir de stockage ;
ii) L'ajout d'une solution aqueuse de dissolution et d'une solution aqueuse basique dans un des réservoirs de stockage ;
iii) La circulation forcée du mélange ainsi obtenu au sein d'un caisson de dissolution et dudit réservoir de stockage ;
iv) L'extraction de la solution aqueuse de XH₄ ainsi obtenue du caisson de dissolution vers le réacteur de production de H₂ ;
v) La reproduction des étapes ii) à iv) en séquence à partir avec un autre réservoir de stockage.

2. Procédé selon la revendication 1 comprenant l'introduction de la solution aqueuse de XH₄ ainsi obtenue après extraction dans le réacteur d'hydrolyse de production de H₂.

3. Procédé selon l'une quelconque des revendications précédentes tel que le XH₄ solide est stocké sous forme de comprimés (« caplets »), granulés (« pellets ») ou poudre.

4. Procédé selon l'une quelconque des revendications précédentes comprenant l'étape d'amorçage comprenant la dissolution de XBH₄ solide par une solution aqueuse d'amorçage embarquée.

5. Procédé selon l'une quelconque des revendications précédentes comprenant le recyclage de l'eau produite lors de la production de H₂ à la sortie de réacteur d'hydrolyse en tant que solution aqueuse de dissolution.

6. Procédé selon l'une quelconque des revendications précédentes tel que la solution aqueuse basique comprend de la soude (NAOH) et/ou de la potasse (KOH).

7. Procédé selon l'une quelconque des revendications précédentes tel que la solution aqueuse basique comprend une ou plusieurs bases à concentration en base comprise entre 1 et 10% en poids.

8. Procédé selon l'une quelconque des revendications précédentes tel qu'il comprend un flux d'azote (N₂) au sein des réservoirs de stockage et du caisson de dissolution.

9. Procédé selon l'une quelconque des revendications précédentes tel qu'il comprend l'extraction de l'hydrogène créé lors de la dissolution vers une pile à combustible.

10. Procédé selon l'une quelconque des revendications précédentes tel que la dissolution est conduite jusqu'à une concentration de XH₄(max) inférieure ou égale à la concentration critique de cristallisation du XH₄.

11. Système de propulsion anaérobie embarqué d'un engin sous-marin comprenant
- un système (10) de production d'hydrogène embarqué à partir de XH₄,
- une pluralité de réservoirs (1, 1', 1") de stockage de XH₄ solide (2, 2', 2"), la pluralité de réservoirs (1,1', 1") de stockage étant montée en parallèle les uns des autres;
- un caisson (11) de dissolution;
- un réacteur d'hydrolyse (10) relié au caisson de dissolution,
- au moins un moyen (3, 3', 3") d'introduction d'une solution aqueuse de dissolution (7,7') dans au moins un réservoir (1, 1', 1") de stockage **Caractérisé en ce qu'**il comprend au moins un moyen (4') de circulation de la solution aqueuse de dissolution (7') entre le caisson (11) de dissolution et au moins un des réservoirs (1, 1', 1") de stockage.

12. Système selon la revendication 11 comprenant en outre :
- un réservoir d'une solution aqueuse d'amorçage ; et
- au moins un moyen d'introduction de la solution aqueuse d'amorçage vers le réservoir (1, 1', 1") de stockage de XH₄ solide (2, 2', 2").

13. Système selon l'une quelconque des revendications 11 ou 12 comprenant au moins un moyen de recyclage de l'eau produite lors de la production de H₂ vers le caisson de dissolution.
